# EUROPEAN PATENT APPLICATION

(11) **EP 4 823 055 A1**
(43) Date of publication of application: **14.10.2026**
(21) Application number: 25820426.2
(22) Date of filing: 14.03.2025
(51) Int. Cl.: H04L 43/062, H04L 43/0811, H04L 41/0631, H04L 67/303, H04L 67/75, H04L 12/28

(54) **ELECTRONIC DEVICE AND CONTROL METHOD THEREOF**

(30) Priority: 03.06.2024 KR 20240072559
(71) Applicant: Samsung Electronics Co., Ltd., Suwon-si, Gyeonggi-do 16677 (KR)
(72) Inventor: KIM, Jinhwan, Suwon-si, Gyeonggi-do 16677 (KR); HAHM, Seongil, Suwon-si, Gyeonggi-do 16677 (KR)
(74) Representative: Appleyard Lees IP LLP
(86) International application number: PCT/KR2025/003293
(87) International publication number: WO 2025/254308

(57) **Abstract**

Provided are an electronic device and a method of operating the electronic device. The electronic device includes a communication interface, a memory storing at least one instruction, and a processor connected to the memory and the communication interface. The processor receives a signal including error information broadcast by another electronic device through the communication interface, the error information including information related to a communication connection loss occurring between the other electronic device and a server, identifies whether to transmit the error information to the server based on the received signal, and controls the communication interface to transmit the error information to the server based on identifying that the error information is to be transmitted to the server.

## Description

### [TECHNICAL FIELD]

The present disclosure relates to an electronic device and a controlling method of the electronic device, and more particularly, to an electronic device and a method for providing information on a communication connection loss occurring between another electronic device and a server.

### [BACKGROUND ART]

Recently, technology related to internet of things (IoT) has developed rapidly. In particular, various electronic devices may be connected to each other to form a home IoT system. The home IoT system may provide various services to a user.

According to an embodiment, a device included in the home IoT system may lose its communication connection with a server due to various reasons. For example, the communication connection between the device and the server may be lost due to the various reasons such as a software problem, removal of a device power cord, a router change, a deteriorated communication quality in a network environment, and a movement of a device location. According to a related art method, the connection loss between the device and the server may be detected by checking whether the communication connection is maintained or lost on the server to which the device is connected.

The reasons for the communication connection loss may include the user intentionally removing the device power cord, failing to update access point (AP) information after changing the same, or changing the device location, or the software requiring improvement. However, if the communication connection between the device and the server is lost, it is very difficult for the server to determine the reason for the connection loss beyond simply identifying that the connection is lost, and accordingly, the communication connection has no choice but to remain lost.

Therefore, there is a need to find a way for the user to identify the reason for or the cause of the connection loss of the device and to provide the user with the identified reason or the cause and a solution.

### [DISCLOSURE]

### [TECHNICAL SOLUTION]

According to an aspect of the disclosure, there is provided an electronic device including: a communication interface; a memory storing at least one instruction; and at least one processor connected to the memory and the communication interface and configured to control the electronic device, wherein, based on the at least one processor executing the at least one instruction, the at least one processor is configured to control the electronic device to: receive a signal including error information broadcast by another electronic device through the communication interface, the error information including information related to a communication connection loss occurring between the other electronic device and a server, identify whether to transmit the error information to the server based on the received signal, and control the communication interface to transmit the error information to the server based on identifying that the error information is to be transmitted to the server.

The communication interface may be configured to periodically scan for the signal broadcast by the other electronic device.

The at least one processor may be configured to control the electronic device to: receive, from the server, a request signal to scan for the signal broadcast by the other electronic device, the request signal based on the server detecting the communication connection loss occurring with the other electronic device, and control the communication interface to scan for the signal broadcast by the other electronic device based on the request signal.

The at least one processor may be configured to control the electronic device to: receive the request signal to scan the signal broadcast by the other electronic device from the server through the communication interface based on the electronic device identified by the server as being located in a same area as the other electronic device.

The electronic device may further include a display and the at least one processor may be configured to control the electronic device to: receive, from the server, a request signal to scan for the signal broadcast by the other electronic device, the request signal based on the server detecting the communication connection loss occurring with the other electronic device, and control the display to provide guide information on the communication connection loss occurring between the other electronic device and the server based on the request signal.

The at least one processor may be configured to control the communication interface to scan for the signal broadcast by the other electronic device based on the electronic device identified as being located in a same area as the other electronic device.

The error information may include information on a cause of the communication connection loss occurring between the other electronic device and the server and identification information of the other electronic device.

The at least one processor may be configured to control the electronic device to: identify whether to transmit the error information to the server by identifying whether the identification information of the other electronic device included in the received signal matches pre-registered identification information.

The at least one processor may be configured to control the electronic device to: receive guide information corresponding to the error information through the communication interface based on the server receiving the error information, wherein the guide information may include at least one of information on a cause of the communication connection loss occurring between the other electronic device and the server or information for resolving the communication connection loss.

According to another aspect of the disclosure, there is provided a method of operating an electronic device, the method including: receiving a signal including error information broadcast by another electronic device, the error information including information related to a communication connection loss occurring between the other electronic device and a server; identifying whether the error information is to be transmitted to the server based on the received signal; and transmitting the error information to the server based on identifying that the error information is to be transmitted to the server.

The method may further include periodically scanning for the signal broadcast by the other electronic device.

The method may further include receiving, from the server, a request signal to scan for the signal broadcast by the other electronic device, the request signal based on the server detecting the communication connection loss occurring with the other electronic device; and scanning for the signal broadcast by the other electronic device based on the request signal.

In the receiving of the request signal, the request signal to scan the signal broadcast by the other electronic device may be received from the server based on the electronic device identified by the server as being located in a same area as the other electronic device.

The method may further include receiving, from the server, a request signal to scan for the signal broadcast by the other electronic device, the request signal based on the server detecting the communication connection loss occurring with the other electronic device; and providing guide information on the communication connection loss occurring between the other electronic device and the server based on the request signal.

The method may further include scanning for the signal broadcast by the other electronic device based on the electronic device identified as being located in a same area as the other electronic device.

### BRIEF DESCRIPTION OF DRAWINGS

Embodiments will be more clearly understood from the following detailed description taken in conjunction with the accompanying drawings in which:
FIG. 1 is a diagram showing a home internet of things (IoT) system according to an embodiment of the present disclosure.
FIG. 2 is a block diagram showing a configuration of an electronic device according to an embodiment of the present disclosure.
FIG. 3 is a sequence diagram for describing a method of providing information on a communication connection loss occurring between another electronic device and a server according to an embodiment of the present disclosure.
FIG. 4 is a diagram for describing a signal including error information according to an embodiment of the present disclosure.
FIG. 5A shows a list for matching and storing a reason for or a cause of the connection loss, an error code, and guide information according to an embodiment of the present disclosure.
FIG. 5B is a diagram showing the guide information provided by a user terminal according to an embodiment of the present disclosure.
FIG. 6 is a sequence diagram for describing a method of providing information on the communication connection loss occurring between another electronic device and the server according to an embodiment of the present disclosure.
FIG. 7 is a sequence diagram for describing a method of providing information on the communication connection loss occurring between another electronic device and the server according to an embodiment of the present disclosure.
FIG. 8 is a diagram showing the guide information for guiding a location movement of the electronic device according to an embodiment of the present disclosure.
FIG. 9 is a flowchart for describing a controlling method of an electronic device according to an embodiment of the present disclosure.

### [BEST MODE]

The present disclosure may be variously modified and have several embodiments, and specific embodiments of the present disclosure are thus shown in the drawings and described in detail in the detailed description. However, it should be understood that the scope of the present disclosure is not limited to the specific embodiments, and includes various modifications, equivalents, and/or alternatives according to the embodiments of the present disclosure. Throughout the accompanying drawings, similar components are denoted by similar reference numerals.

In describing the present disclosure, omitted is a detailed description of a case where it is decided that the detailed description of the known functions or configurations related to the present disclosure may unnecessarily obscure the gist of the present disclosure.

In addition, the following embodiments may be modified in several different forms, and the scope and spirit of the present disclosure are not limited to the following embodiments. Rather, these embodiments are provided to make the present disclosure thorough and complete, and completely transfer the spirit of the present disclosure to those skilled in the art.

Terms used in the present disclosure are used only to describe the specific embodiments rather than limiting the scope of the present disclosure. Here, a term of a singular number includes its plural number unless explicitly interpreted otherwise in the context.

In the present disclosure, an expression "have", "may have", "include", "may include", or the like, indicates the presence of a corresponding feature (for example, a numerical value, a function, an operation, or a component such as a part), and does not exclude the presence of an additional feature.

In the present disclosure, an expression "A or B", "at least one of A and/or B", "one or more of A and/or B", or the like, may include all possible combinations of items enumerated together. For example, "A or B", "at least one of A and B" or "at least one of A or B" may indicate all of 1) a case where at least one A is included, 2) a case where at least one B is included, or 3) a case where both of at least one A and at least one B are included.

In the present disclosure, expressions "first", "second", and the like used in the present disclosure, may indicate various components regardless of the sequence and/or importance of the components. These expressions are used only to distinguish one component and another component from each other, and do not limit the corresponding components.

In the present disclosure, if any component (for example, a first component) is mentioned to be "(operatively or communicatively) coupled with/to" or "connected to" another component (for example, a second component), it should be understood that any component is directly coupled to another component or may be coupled to another component through yet another component (for example, a third component).

On the other hand, if any component (for example, the first component) is mentioned to be "directly coupled" or "directly connected to" another component (for example, the second component), it should be understood that yet another component (for example, the third component) is not present between any component and another component.

An expression "configured (or set) to" used in the present disclosure may be replaced with an expression "suitable for", "having the capacity to", "designed to", "adapted to", "made to", or "capable of" based on a context. A term "configured (or set) to" may not necessarily mean "specifically designed to" in hardware.

Rather, an expression "a device configured to" in some contexts may indicate that the device may "perform~" together with another device or component. For example, "a processor configured (or set) to perform A, B and C" may indicate a dedicated processor (for example, an embedded processor) that performs a corresponding operation or a generic-purpose processor (for example, a central processing unit (CPU) or an application processor) that performs the corresponding operation by executing at least one software program stored in a memory device.

According to one or more embodiments, a "module" or a "~er/or" may perform at least one function or operation, and be implemented by hardware, software, or a combination of hardware and software. In addition, a plurality of "modules" or a plurality of "~ers/ors" may be integrated with each other in at least one module and implemented by at least one processor except for a "module" or an "~er/or" that needs to be implemented in specific hardware.

According to an embodiment, various elements and regions in the drawings are schematically shown. Therefore, the spirit of the present disclosure is not limited to relative sizes or intervals shown in the accompanying drawings.

Hereinafter, the embodiments of the present disclosure are described in detail with reference to the accompanying drawings so that those skilled in the art to which the present disclosure pertains may easily practice the present disclosure.

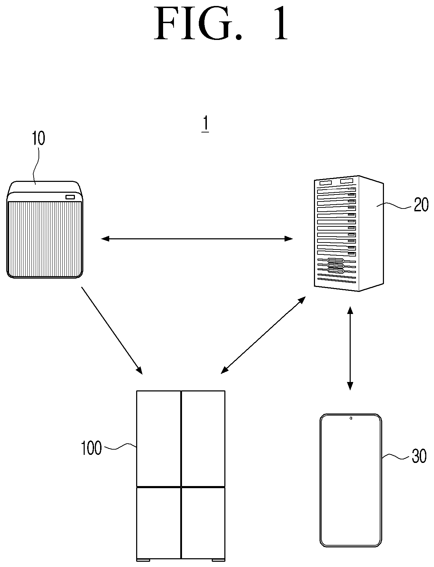

FIG. 1 is a diagram showing a home internet of things (IoT) system 1 (hereinafter referred to as "system") according to an embodiment of the present disclosure. As shown in FIG. 1, the system 1 may include a first electronic device 100, a second electronic device 10, a server 20, and a user terminal 30. However, the disclosure is not limited thereto, and as such, according to an embodiment, the system 11 may include more than two electronic devices. According to some embodiments, the first electronic device 100 may be referred to as the electronic device and the second electronic device 10 may be referred to as another electronic device.

Here, each of the first electronic device 100 and the second electronic device 10 may be implemented as any one of various types of home appliances. For example, as shown in FIG. 1, the second electronic device 10 may be implemented as an air purifier, and the first electronic device 100 may be implemented as a refrigerator. However, this configuration is only an embodiment, and the corresponding devices may be implemented as various types of home appliances including, but not limited to, a dishwasher, an electric range, an electric oven, an air conditioner, a clothes manager, a washing machine, a dryer, a microwave oven, a cleaning robot, a vacuum cleaner, or a television.

The server 20 may include a communication module, at least one processor, and at least one memory. For example, the communication module may be configure to or capable of communicating with another server, the second electronic device 10, the first electronic device 100, or the user terminal 30. The at least one processor may be configure to or capable of processing data received from another server, another electronic device 10, the electronic device 100, or the user terminal 30. The at least one memory may be configured to or capable of storing a program for processing the data or the processed data. The server 20 may be implemented as any of various computing devices including, but not limited to, a workstation, a cloud, a data drive, or a data station. The server 20 may be implemented as one or more servers physically or logically separated from each other based on their functions, a detailed configuration of each function, or data, or the like, transmit and receive data through communication between the respective servers, and process the transmitted and received data.

The server 20 may perform functions such as managing a user account, registering the first electronic device 100 or the second electronic device 10 by associating the corresponding device with the user account, and managing or controlling the registered devices. For example, a user may access to the server 20 through the user terminal 30 and create or generate the user account. The user account may be identified by an identifier (ID) and a password set by the user. The server 20 may register the first electronic device 100 or the second electronic device 10 to the user account based on an established procedure. For example, the server 20 may register, manage, and control the first electronic device 100 by connecting identification information (e.g., serial number or MAC address) of the first electronic device 100 to the user account. In addition, according to an embodiment, the server 20 may register, manage, and control the second electronic device 10 by connecting identification information (e.g., serial number or MAC address) of the second electronic device 10 to the user account.

The user terminal (or "the user device" or the like) 30 may include a communication module capable of communicating with the electronic device 100 or the server 20, a user interface for receiving a user input or outputting information to the user, at least one processor for controlling an operation of the user terminal 30, and at least one memory storing a program for controlling the operation of the user terminal 30.

The user terminal 30 may be carried by the user or located in the home, office, or the like of the user. The user terminal 30 may include, but is not limited to, a personal computer, a terminal, a portable telephone, a smartphone, a handheld device, a wearable device, or the like, and is not limited thereto.

The memory of the user terminal 30 may store software code, instructions, or a program for controlling the first electronic device 100. For example, the program may be an application. The application may be pre-installed on the user terminal 30 at the time of purchase or installed on the user terminal 30 by being downloaded from an external server.

The user may access to the server 20 by executing the application installed on the user terminal 30 and create or generate the user account, and register the first electronic device 100 and the second electronic device 10 by communicating with the server 20 based on the logged-in user account.

For example, the user may manipulate the electronic device 100 to enable the first electronic device 100 to access to the server 20 according to a procedure guided by the application installed on the user terminal 30. In this case, the user may register the first electronic device 100 to the user account by entering the identification information (e.g., serial number or MAC address) of the first electronic device 100 into the user account on the server 20.

The user may control the first electronic device 100 by using the application installed on the user terminal 30. For example, the first electronic device 100 registered in the user account may appear based on the user logging into the user account by using the application installed on the user terminal 30, and a control command may be transmitted to the first electronic device 100 through the server 20 based on the user inputting the control command for the electronic device 100.

A network for connecting the devices included in the system 1 may include both a wired network and a wireless network. The wired network may include, but is not limited to, a cable network or a telephone network, and the wireless network may include, but is not limited to, any network that transmits and receives a signal through a radio wave. The wired network and the wireless network may be connected to each other.

The network may include, but is not limited to, a wide area network (WAN) such as the Internet, a local area network (LAN) formed around an access point (AP), or a short-range wireless network without using the access point (AP). The short-range wireless network may include Bluetooth (IEEE 802.15.1), Zigbee (IEEE 802.15.4), wireless-fidelity (Wi-Fi) direct, near field communication (NFC), Z-wave or the like, and is not limited thereto.

The access point (AP) may connect the first electronic device 100, the second electronic device 10, or the user terminal 30 to the wide area network (WAN) to which the server 20 is connected. The electronic device 100 or the second electronic device 10 may be connected to the server 20 through the wide area network (WAN).

The access point (AP) may communicate with the first electronic device 100 or the second electronic device 10 by using the wireless communication such as Wi-Fi (IEEE 802.11), Bluetooth (IEEE 802.15.1), or Zigbee (IEEE 802.15.4), access to the wide area network (WAN) by using the wired communication, and is not limited thereto.

According to various embodiments, the first electronic device 100 or the second electronic device 10 may be directly connected to the server 20 or the user terminal 30 without using the access point (AP).

The first electronic device 100 may be connected to the second electronic device 10, the user terminal 30, or the server 20 through a long-range wireless network or the short-range wireless network. For example, the second electronic device 10 may be connected to the electronic device 100 through the short-range wireless network (e.g., Wi-Fi Direct).

As another example, the second electronic device 10 may be connected to the user terminal 30 or the server 20 through the wide area network (WAN) by using the long-range wireless network (e.g., cellular communication module).

As yet another example, the first electronic device 100 may connect to the wide area network (WAN) by using the wired communication, and connected to the user terminal 30 or the server 20 through the wide area network (WAN).

In an example case in which the first electronic device 100 is able to access to the wide area network (WAN), the first electronic device 100 may be operated as the access point. For example, the first electronic device 100 may be operated as the access point based on the first electronic device 100 being to access to the wide area network (WAN) by using the wired communication. Accordingly, the first electronic device 100 may connect the second electronic device 10 to the wide area network (WAN) to which the server 20 is connected. In addition, the second electronic device 10 may connect the first electronic device 100 to the wide area network (WAN) to which the server 20 is connected.

The first electronic device 100 may transmit information on its operation or state to the second electronic device 10, the user terminal 30, or the server 20 through the network. For example, the first electronic device 100 may transmit information on a communication state of the second electronic device 10 (e.g., error information) to the server 20.

The first electronic device 100 may acquire various information from the second electronic device 10, the user terminal 30, or the server 20, and provide the acquired information to the server 20 or the user terminal 30. For example, the first electronic device 100 may receive the error information broadcast by the second electronic device 10.

The first electronic device 100 may be operated based on a control command received from the second electronic device, the user terminal 30, or the server 20. For example, the first electronic device 100 may be operated based on the control command received from the server 20 based on a prior approval from the user being acquired to enable the first electronic device 100 to be operated based on the control command received from the server 20 even without the user input. Here, the control command received from the server 20 may include the control command input by the user through the user terminal 30 or a control instruction generated based on a predetermined condition, and is not limited thereto.

The user terminal 30 may transmit user information to the first electronic device 100 or the server 20 through the communication module. For example, the user terminal 30 may transmit information on a location of the user, a health state of the user, a preference of the user, a schedule of the user, or the like to the server 20. The user terminal 30 may transmit the user information to the server 20 based on the user prior approval.

The first electronic device 100, the user terminal 30, or the server 20 may determine the control command by using technology such as an artificial intelligence. For example, the server 20 may process the received information by using the technology such as the artificial intelligence in case of receiving information on the operation or state of the first electronic device 100 or the information about the user of the user terminal 30, and transmit a processing result or the control command to the first electronic device 100 or the user terminal 30 based on the processing result.

According to an embodiment, the first electronic device 100 may receive the signal including the error information broadcast by the second electronic device 10. Here, the error information may include information on a communication connection loss occurring between another electronic device 10 and the server 20. As an example, the error information may include information on a reason for or a cause of the communication connection loss occurring between the second electronic device 10 and the server 20. Here, the signal may further include identification information of the second electronic device 10 or the like in addition to the error information.

The first electronic device 100 may identify whether to transmit the error information to the server 20 based on the received signal. In an embodiment, the first electronic device 100 may determine whether the second electronic device 10 is a pre-registered device based on the identification information of the second electronic device 10 that is included in the received signal, and identify whether to transmit the error information to the server 20.

The first electronic device 100 may transmit the error information to the server 20 based on an identification result. For example, the first electronic device 100 may transmit the error information to the server 20 if the error information is received from the pre-registered another electronic device 10.

The server 20 may acquire information on the communication connection loss occurring with the second electronic device 10 based on the error information received from the first electronic device 100, and transmit the acquired information to the user terminal 30.

The user terminal 30 may provide guide information based on the error information received from the server 20. Here, the guide information may include at least one of the information on the cause of the communication connection loss occurring between the second electronic device 10 and the server 20 or information for resolving the communication connection loss.

According to an embodiment, a quick and accurate solution for the communication connection loss may be conveniently provided because the user may receive the information on the communication connection loss occurring between the second electronic device 10 and the server 20 by using the method described above.

According to an embodiment, , the above-described embodiment describes that the first electronic device 100 and the user terminal 30 are implemented as separate devices, which is only an embodiment, and the first electronic device 100 and the user terminal 30 may be implemented as a single device.

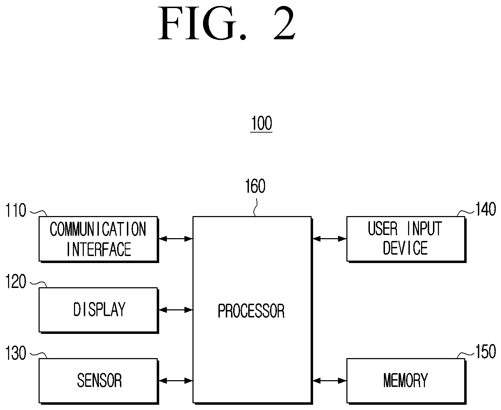

FIG. 2 is a block diagram showing a configuration of an electronic device according to an embodiment of the present disclosure. The electronic device illustrated in FIG. 2 may correspond to any one of the first electronic device 100, the second electronic device 10 or the user terminal 30 illustrated in FIG. 1. Hereinafter, for clarity in explanation, the first electronic device 100 may be referred to as the electronic device 100 and the second electronic device 10 may be referred to as another electronic device 10 or the other electronic device 10. As shown in FIG. 2, the electronic device 100 may include a communication interface 110, a display 120, a sensor 130, a user input device 140, a memory 150, and a processor 160. However, this configuration is only an embodiment, and some components may be removed or added based on a type of electronic device 100.

The communication interface 110 may include at least one circuitry and communicate with various types of external devices or servers. The communication interface 110 may include, but is not limited to, at least one of a Bluetooth low energy (BLE) module, a wireless-fidelity (Wi-Fi) communication module, a cellular communication module, a 3rd generation (3G) mobile communication module, a 4th generation (4G) mobile communication module, a 4th generation long term evolution (LTE) communication module, or a 5th generation (5G) mobile communication module.

According to an embodiment, the communication interface 110 may transmit various information to another electronic device 10, the user terminal 30, or the server 20 and/or receive various information from the other electronic device 10, the user terminal 30, or the server 20. In one or more embodiments, the communication interface 110 may receive a signal broadcast by the other electronic device 10 by performing a scanning operation. Here, the signal may include the error information and the identification information of the other electronic device 10. In one or more embodiments, the communication interface 110 may receive the signal broadcast by the other electronic device 10 by periodically performing the scanning operation. In one or more embodiments, the communication interface 110 may receive the signal broadcast by the other electronic device 10 by performing the scanning operation based on a request signal received from the server 20. For example, the communication interface 110 may perform the scanning operation in response to receiving the request signal from the server 20. In one or more embodiments, the communication interface 110 may receive the signal broadcast by the other electronic device 10 by performing the scanning operation based on the communication interface 110 location within a reference distance from the other electronic device 10. The reference distance may be a predetermined distance.

In addition, the communication interface 110 may transmit the error information to the server 20. Here, the communication interface 110 may transmit the identification information of the other electronic device 10 together with the error information. In addition, the communication interface 110 may receive, from the server 20, the request signal to scan the signal broadcast by the other electronic device 10.

In one or more embodiments, the communication interface 110 may have different modules for communicating with the other electronic device 10 and for communicating with the server 20. For example, the electronic device 100 may communicate with the external device through a short-range wireless communication interface (e.g., Bluetooth low energy (BLE) module or Wi-Fi Direct communication module), and communicate with the server 20 through a long-range wireless communication interface (e.g., Wi-Fi communication module, LTE communication module, or 5G communication module).

The display 120 may include various types of display panels. For example, the display 120 may include, but is not limited to, a liquid crystal display (LCD) panel, an organic light-emitting diode (OLED) panel, an active-matrix organic light-emitting diode (AM-OLED) panel, a liquid crystal on silicon (LcoS) panel, a quantum dot light-emitting diode (QLED) panel, a digital light processing (DLP) panel, a plasma display panel (PDP), an inorganic LED panel, and a micro-LED panel, and is not limited thereto. According to an embodiment, the display 150 may be included in a touch screen together with a touch panel, or may be made of a flexible panel.

According to an embodiment, the display 120 may provide the guide information on the communication connection loss occurring between the other electronic device 10 and the server 20 based on the request signal received from the server 20. In an embodiment, the guide information may include a guidance message to move closer to the other electronic device 10 in addition to the information on the communication connection loss occurring between the electronic device 10 and the server 20.

The sensor 130 may detect a state of the electronic device 100 or an external environmental state, and generate an electrical signal or a data value, corresponding to the detected state. For example, the state of the electronic device may include, but is not limited to a movement state, an operation state of a location of the electronic device 100. The external environmental state may include, but is not limited to a state of the user. The sensor 130 may include, for example, a gesture sensor or an acceleration sensor.

According to an embodiment, the sensor 130 may detect location information of the electronic device 100 to perform the scanning operation of the communication interface 110 for receiving the signal broadcast by the other electronic device 10.

The user input device 140 may include, but is not limited to, a button, a lever, a switch, a touch-type interface, or the like. For example, the touch-type interface may be implemented by receiving the input through a user touch on a screen of the display 120 included in the electronic device 100. According to an embodiment, the user input device 140 may receive the various user inputs for controlling not only the electronic device 100 but also other devices.

The memory 150 may store an operating system (OS) for controlling overall operations of components included in the electronic device 100 and instructions or data related to the components of the electronic device 100. According to an embodiment, the memory 150 may include a plurality of modules for providing the information on the communication connection loss occurring between another electronic device 10 and the server 20. According to an embodiment, the electronic device 100 may load, into a volatile memory, data for performing various operations by the various modules for providing the information on the communication connection loss occurring between another electronic device 10 and the server 20 that is stored in the nonvolatile memory if a function for providing the information on the communication connection loss occurring between another electronic device 10 and the server 20 is executed. Here, loading indicates an operation of retrieving and storing the data stored in the nonvolatile memory into the volatile memory to enable the processor 160 to access the data.

According to an embodiment, the memory 150 may be implemented as the nonvolatile memory (e.g., hard disk, solid state drive (SSD), or flash memory), the volatile memory (which may also include a memory within the processor 160), or the like.

The processor 160 may control the electronic device 100 based on at least one instruction stored in the memory 150. According to an embodiment, the processor 160 may include one or more processors. According to an embodiment, at least one processor may include, but is not limited to, at least one of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. According to an embodiment, at least one processor may control one of other components of the electronic device or any combination thereof, and perform an operation related to the communication or data processing. According to an embodiment, at least one processor may execute at least one program or instruction stored in the memory. For example, at least one processor may perform a method according to an embodiment of the present disclosure by executing at least one instruction stored in the memory.

In an example case in which the method according to an embodiment of the present disclosure includes a plurality of operations, the plurality of operations may be performed by one processor or may be performed by a plurality of processors. For example, in a case in which the method includes a first operation, a second operation, and a third operation, the first operation, the second operation, and the third operation may all be performed by a first processor. However, the disclosure is not limited thereto, and as such, according to another embodiment, the first operation and the second operation may be performed by the first processor (e.g., general-purpose processor), and the third operation may be performed by a second processor (e.g., artificial intelligence-only processor).

According to an embodiment, at least one processor may be implemented as a single core processor including a single core, or may be implemented as at least one multi core processor including multi cores (for example, homogeneous multi cores or heterogeneous multi cores). In an example case in which the at least one processor is implemented as the multicore processor, each of the multicores included in the multicore processor may include a processor internal memory such as a cache memory or an on-chip memory, and a common cache shared by the multicores may be included in the multicore processor. In addition, each of the multicores (or some of the multicores) included in the multicore processor may independently read and perform a program instruction for implementing the method according to an embodiment of the present disclosure, or all (or some) of the multicores may be connected to each other to read and perform the program instruction for implementing the method according to an embodiment of the present disclosure.

In an example case in which the method according to an embodiment of the present disclosure includes a plurality of operations, the plurality of operations may be performed by one core among the multicores included in the multicore processor, or may be performed by the multicores. For example, in an example case in which the first operation, the second operation, and the third operation are performed using the method according to an embodiment, the first operation, the second operation, and the third operation may all be performed by a first core included in the multicore processor. However, the disclosure is not limited thereto, and as such, according to another embodiment, the first operation and the second operation may be performed by the first core included in the multicore processor, and the third operation may be performed by a second core included in the multicore processor.

In the embodiments of the present disclosure, the processor 160 may indicate a system-on-chip (SoC) in which at least one processor and other electronic components are integrated, the single core processor, the multicore processor, or the core included in the single core processor or the multicore processor. Here, the core may be implemented as the CPU, the GPU, the APU, the MIC, the DSP, the NPU, the hardware accelerator, the machine learning accelerator, or the like. However, the embodiments of the present disclosure are not limited thereto.

According to an embodiment, the processor 160 may receive the signal including the error information broadcast by the other electronic device 10 through the communication interface 110 by executing at least one instruction. Here, the error information may include the information on the communication connection loss occurring between the other electronic device 10 and the server 20. The processor 160 may identify whether to transmit the error information to the server based on the received signal. The processor 160 may control the communication interface 110 to transmit the error information to the server 20 based on a result (e.g., identification result) of identifying whether to transmit the error information to the server.

In one or more embodiments, the processor 160 may receive the request signal to scan the signal broadcast by the other electronic device 10 from the server 20 through the communication interface 110 based on the server 20 detecting the communication connection loss occurring with another electronic device 10. The processor 160 may control the communication interface 110 to scan the signal broadcast by the other electronic device 10 based on the request signal. The processor 160 may control the communication interface 110 to scan the signal broadcast by the other electronic device 10 in response to the request signal.

In one or more embodiments, the processor 160 may receive the request signal to scan the signal broadcast by the other electronic device 10 from the server 20 through the communication interface 110 based on the electronic device 100 identified by the server 20 as being located in a same area or a same space as the other electronic device 10.

In one or more embodiments, the processor 160 may receive the request signal to scan the signal broadcast by the other electronic device 10 from the server 20 through the communication interface 110 based on the server 20 detecting the communication connection loss occurring with the other electronic device 10. The processor 160 may control the display 120 to provide the guide information on the communication connection loss occurring between the other electronic device 10 and the server 20 based on the request signal.

In one or more embodiments, the processor 160 may control the communication interface 110 to scan the signal broadcast by the other electronic device 10 based on the electronic device 100 identified as being located in the same space as the other electronic device 10.

In one or more embodiments, the signal broadcast by the other electronic device 10 may include the error information including the information on the cause of the communication connection loss occurring between the other electronic device 10 and the server 20, and the identification information of the other electronic device 10. Here, the processor 160 may identify whether to transmit the error information to the server 20 by identifying whether the identification information of the other electronic device 10 that is included in the received signal matches pre-registered identification information.

In one or more embodiments, the processor 160 may receive the guide information corresponding to the error information through the communication interface 100 based on the server 20 receiving the error information. Here, the guide information may include at least one of the information on the cause of the communication connection loss occurring between the other electronic device 10 and the server 20 or the information for resolving the communication connection loss.

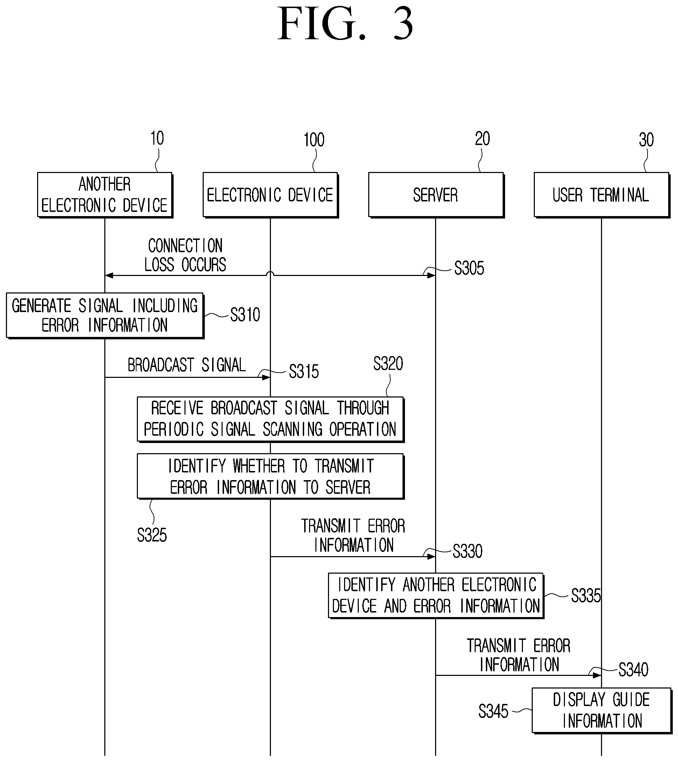

FIG. 3 is a sequence diagram for describing a method of providing, to an electronic device, information on communication connection loss occurring between another electronic device and a server according to an embodiment of the present disclosure.

For example, the connection loss may occur between the other electronic device 10 and the server 20 (S305). Here, the connection loss may occur due to various reasons or causes. For example, the various reasons or causes may include, but is not limited to, router connection failure (e.g., authentication failure or extensible authentication protocol over LAN (EAPOL) failure), dynamic host configuration protocol (DHCP) failure occurring on the router, router connection failure (e.g., AP not found), router connection failure (e.g., password mismatch), session connection failure with a cloud server, domain name system (DNS) failure with open connectivity foundation (OCF) cloud address, software (S/W) crash occurrence, or weak signal strength.

According to an embodiment, the other electronic device 10 may generate the signal including the error information (S310). Here, the other electronic device 10 may acquire the information on the communication connection loss occurring with the server 20. For example, the other electronic device 10 may acquire the error information including the information on the cause of the communication connection loss based on a problem occurring during a communication connection process with the server 20. Here, the error information may be replaced with a term such as an "error code" or "bug information". In addition, the other electronic device 10 may include the identification information of the other electronic device 10 in the signal. For example, the identification information of the other electronic device 10 may include at least one of information on the type, product number, and Mac address of the other electronic device 10, and information on the user using the other electronic device 10.

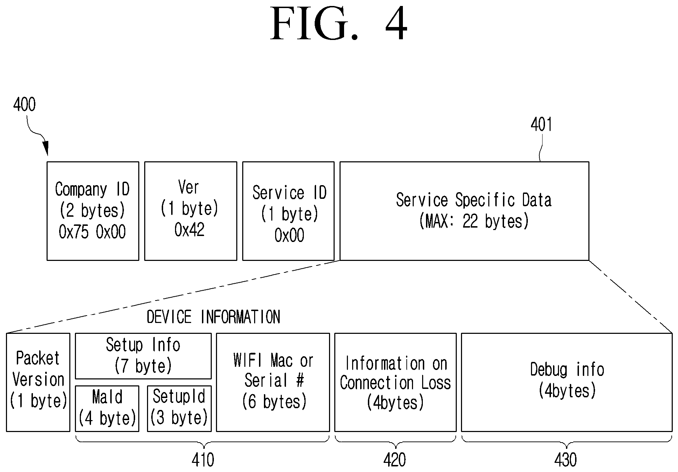

FIG. 4 is a diagram for describing the signal including the error information according to an embodiment of the present disclosure.

According to an embodiment, a signal 400 including the error information may be a signal generated based on a Bluetooth low energy (BLE) communication standard. The signal including the error information may include a company ID region, a version region, a service ID region, and a service specific data region 401. Here, the service specific data region 401 may include the error information and the identification information of the other electronic device 10. For example, the service specific data region 401 may have a first region 410 for storing the information on the other electronic device 10, a second region 420 for storing information on the cause of the connection loss, and a third region 430 for storing debug information including additional information on the connection loss. For example, the information related to the other electronic device 10 stored in the first region may include, but is not limited to, (for example, product information, Wi-Fi Mac address information, or serial number information. For example, the debug information stored in the third region 430 may include, but is not limited to, the number of connection losses, a time of the connection loss, information on the AP attempting the connection, or the user information.

According to an embodiment, the information included in the signal 400 described with reference to FIG. 4 is only an embodiment, and other information may be included or some information may be omitted. In addition, as shown in FIG. 4, the signal may be generated based on the BLE communication standard, which is only an embodiment, and the signal may be generated based on the various communication standards such as the Wi-Fi communication standard.

Referring back to FIG. 3, the other electronic device 10 may broadcast the generated signal (S315). Here, broadcasting is one of communication methods for transmitting the data to a plurality of devices, and specific information may be notified to the plurality of devices near and/or around the other electronic device 10 through broadcasting. For example, the information may be notified to devices that are without a reference distance from the other electronic device 10.

The electronic device 100 may receive the broadcast signal through a periodic signal scanning operation (S320). For example, the electronic device 100 may periodically perfoming scanning operation to receive the signal broadcast by the external device. For example, the electronic device 100 may scan for the signal broadcast by the external device at each 100 millisecond (ms) cycle.

The electronic device 100 may identify whether to transmit the error information to the server 20 (S325). For example, the electronic device 100 may identify whether the other electronic device 10 is the pre-registered electronic device based on the identification information of the other electronic device 10 (e.g., serial number or MAC address of the other electronic device 10 and the user ID) included in the signal broadcast by the other electronic device 10. For example, the electronic device 100 may identify whether to transmit the error information to the server 20 by identifying whether the identification information of the other electronic device 10 included in the received signal matches its pre-registered identification information. Therefore, the error information broadcast by another electronic device (e.g., electronic device next door) that is not registered may not be transmitted to the external server.

The electronic device 100 may transmit the error information to the server 20 (S330). The electronic device 100 may transmit the error information broadcast by the other electronic device 10 to the server 20 based on identifying that the error information is required to be transmitted to the server 20. Here, the electronic device 100 may transmit the identification information of the other electronic device 10 together with the error information. In addition, the electronic device 100 may transmit the error information to the server 20 each time the electronic device 100 receives the error information, which is only an example embodiment, and the electronic device 100 may transmit the error information to the server 20 only based on the error information including a change according to an example embodiment.

The server 20 may identify the other electronic device 10 and the error information based on the information received from the electronic device 100 (S335). That is, the server 20 may identify the information on the cause of the connection loss based on the error code received by the electronic device 100, and check the user using the other electronic device 10 based on the identification information of the other electronic device 10. Here, the server 20 may identify information on the user terminal 30 of the user using the other electronic device 10.

The server 20 may transmit the error information to the user terminal 30 (S340). For example, the server 20 may transmit the error information to the user terminal 30 based on the information on the user terminal 30 of the user using the other electronic device 10.

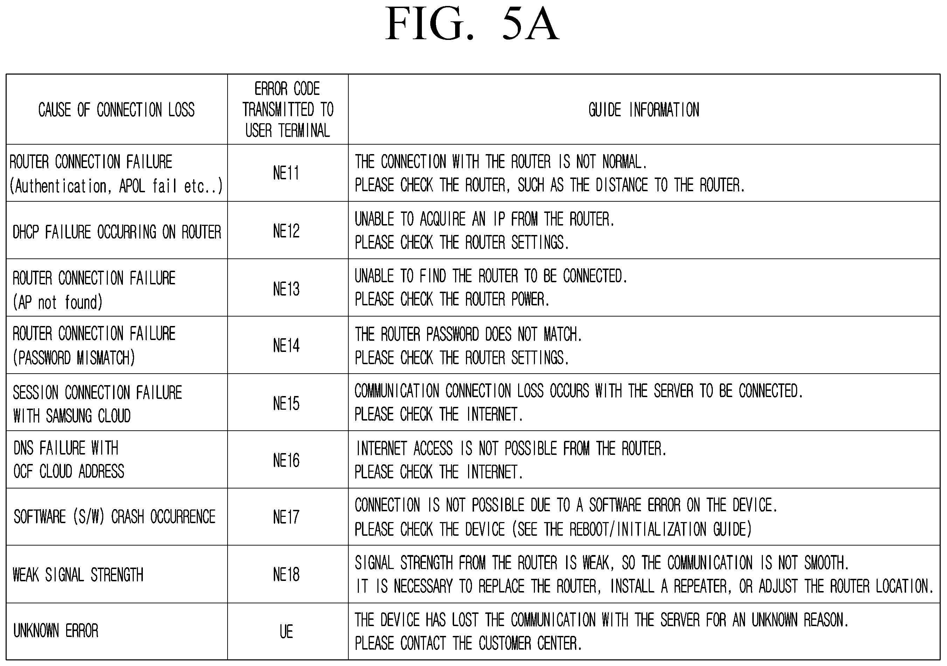

The user terminal 30 may display the guide information based on the error information (S345). Here, the user terminal 30 may match and store the cause of the connection loss, the error code, and the guide information, as shown in FIG. 5A. For example, the user terminal 30 may receive information on an error code "NE 11" based on the connection loss occurring between the other electronic device 10 and the server 20 due to the router connection failure (e.g., authentication failure or EAPOL failure). The user terminal 30 may identify the guide information matching the error code "NE 11" based on a matching table as shown in FIG. 5A. Here, the guide information may include the information on the other electronic device 10, the information on the cause of the connection loss, and information on a solution for the connection loss.

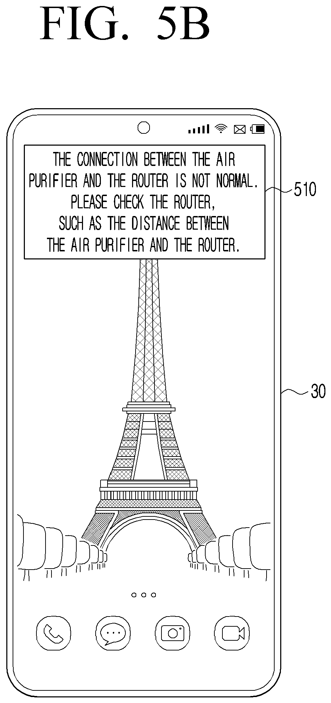

As an example, the user terminal 30 may provide guide information 510 stating, "The connection with the router is not normal. Please check the router, such as the distance to the router", as shown in FIG. 5B. Here, the user terminal 30 may provide the guide information 510 at the top of the display screen in the form of a feed message, as shown in FIG. 5B. However, this configuration is only an embodiment, and the user terminal 30 may not only display the guide information 510 in various formats on various regions of the display screen, but also provide the guide information in an audible form through a speaker.

According to an embodiment, the above-described embodiment describes that the server 20 transmits the error information to the user terminal 30, and the user terminal 30 identifies and provides the guide information matching the error information, which is only an embodiment, and the server 20 may identify the guide information matching the error information and transmit the same to the user terminal 30.

In addition, the above-described embodiment describes that the electronic device 100 transmits the error information to the user terminal 30 through the server 20, which is only an embodiment, and the electronic device 100 may directly transmit the error information to the user terminal 30.

According to an embodiment, the server 20 may detect the connection loss occurring with the other electronic device 10, then determine that the communication connection is lost due to a power cord connection problem, and may not provide the guide information to the user based on the error information not received from the electronic device 100. That is, the server 20 may not transmit the error information separately to the user terminal. According to an embodiment, the above-described embodiment is only an embodiment, and the server 20 may determine that the communication connection is lost due to the power cord connection problem and provide the guide information to the user terminal 30. Here, the guide information may include information notifying the user that power connection is required.

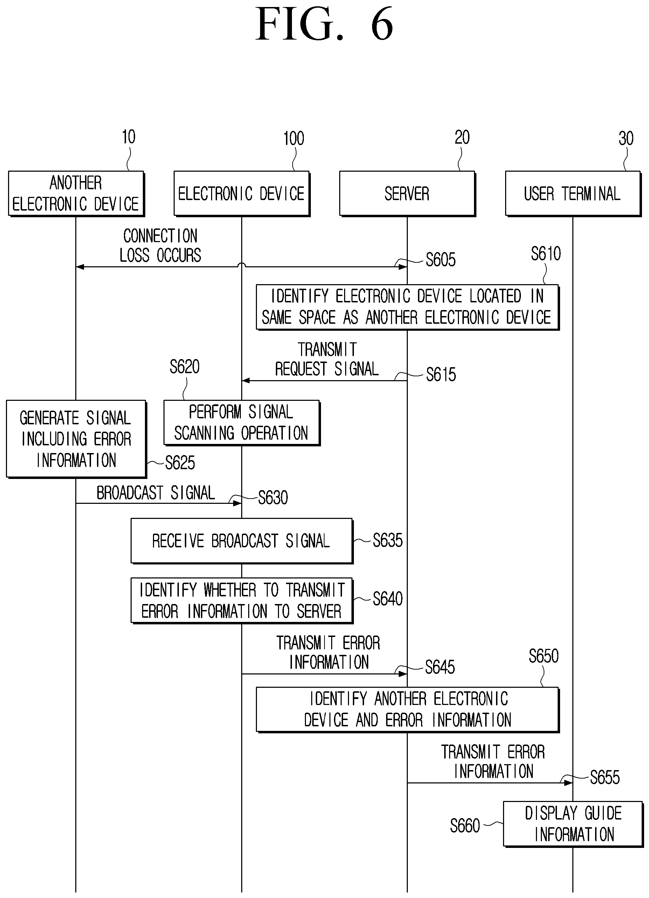

According to an embodiment, the above-described embodiment describes that the electronic device 100 performs the scanning operation periodically, which is only an embodiment, and the electronic device 100 may perform the scanning operation by receiving the request signal from the server 20. Hereinafter, a detailed description is provided reference to FIG. 6.

FIG. 6 is a sequence diagram for describing a method of providing the information on the communication connection loss occurring between another electronic device and the server according to an embodiment of the present disclosure.

The connection loss may occur between the other electronic device 10 and the server 20 (S605).

The server 20 may detect occurrence of the connection loss and identify the electronic device located in the same space or the same area as the other electronic device 10 (S610). In one or more embodiments, the server 20 may identify the electronic device located in the same space as the other electronic device 10 based on information on the system 1 registered to the server 20. Here, the information on the system 1 may include identification information, location information, address information, or the like of devices registered to the system 1. Accordingly, the server 20 may identify the electronic device located in the same space as the other electronic device 10 based on the location information of the devices registered to the system 1. In one or more embodiments, the server 20 may identify a device that is not located in the same space as the other electronic device 10 and is capable of moving toward the other electronic device 10. For example, the server 20 may identify a robot cleaner that is not currently located in the same space as the other electronic device 10 and is capable of moving toward the location of the other electronic device 10 as the electronic device located in the same space as the other electronic device 10. In an example case, a same space may mean a same room, but the disclosure is not limited thereto. For example, the server 20 may identify a robot cleaner that is not currently located in the same room as the other electronic device 10 and is capable of moving toward the location of the other electronic device 10 as the electronic device located in the same room as the other electronic device 10.

The server 20 may transmit the request signal to the identified electronic device 100 (S615). Here, the request signal may be a signal requesting to receive the signal broadcast by the other electronic device 10. Here, the request signal may receive the identification information of the other electronic device 10.

The electronic device 100 may perform the scanning operation based on the request signal from the server 20(S620). For example, the electronic device 100 may perform the scanning operation in response to the request signal from the server 20(S620). That is, the electronic device 100 may control the communication interface 110 to receive the signal broadcast by the other electronic device 10.

According to an embodiment, the other electronic device 10 may generate the signal including the error code after the connection loss occurs (S625) and broadcast the generated signal (S630).

The electronic device 100 may receive the broadcast signal through the scanning operation (S635).

Subsequent operations S640 to S660 are the same as the operations S325 to S345 described with reference to FIG. 3, and their redundant descriptions are thus omitted.

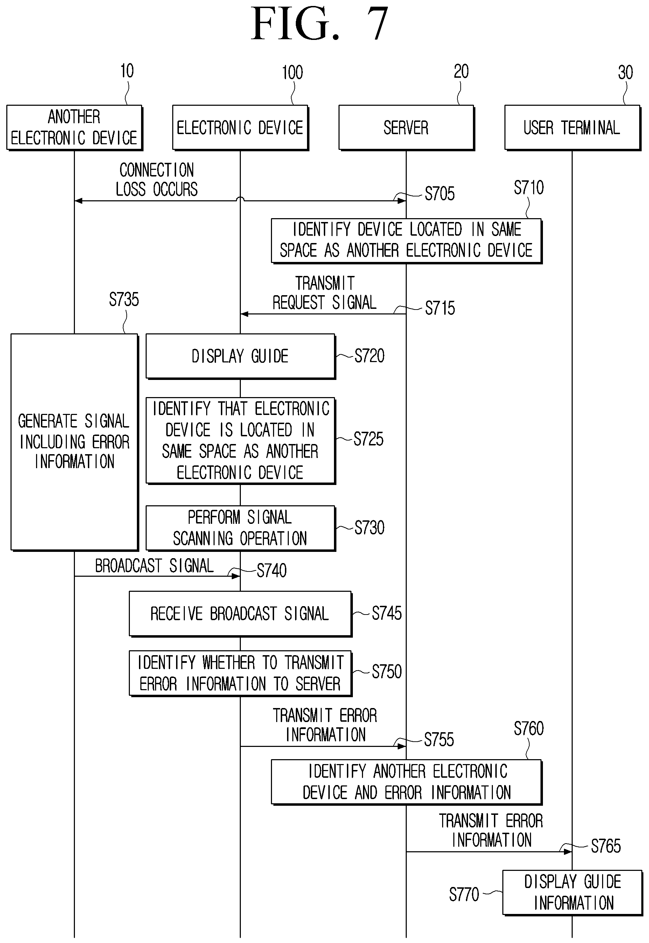

In addition, the server 20 may transmit the request signal including the information on the communication connection loss to the electronic device 100 carried by the user based on no device located in the same space as the other electronic device 10. Here, the electronic device 100 may be implemented as a portable terminal such as a smartphone or a tablet personal computer (PC). Hereinafter, a detailed description is provided reference to FIG. 7.

FIG. 7 is a sequence diagram for describing a method of providing the information on the communication connection loss occurring between another electronic device and the server according to an embodiment of the present disclosure.

The connection loss may occur between the other electronic device 10 and the server 20 (S705).

The server 20 may detect the occurrence of the connection loss and identify the electronic device located in the same space as the other electronic device 10 (S710). In one or more embodiments, the server 20 may identify the electronic device located in the same space as the other electronic device 10 based on the information on the system 1 registered to the server 20.

The server 20 may transmit the request signal to the electronic device 100 based on identifying that there is no electronic device located in the same space as the other electronic device 10 (S715).

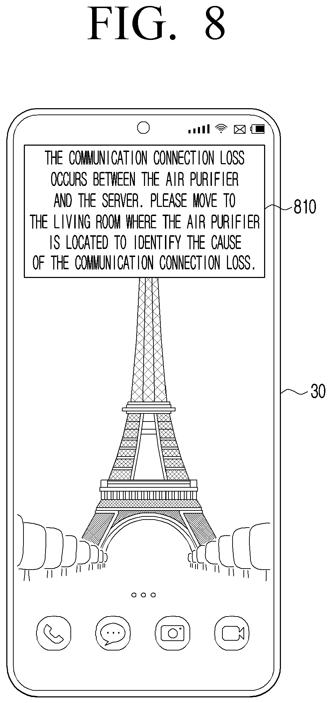

The electronic device 100 may display a guide based on the request signal (S720). For example, the electronic device 100 may provide the guide information on the communication connection loss occurring between the other electronic device 10 and the server 20. Here, the guide information may include at least one of the information on the other electronic device 10, the information on the communication connection loss occurring between the other electronic device 10 and the server 20, the location information of the other electronic device 10, and the guidance information to move toward the location of the other electronic device 10. As an example, the electronic device 100 may display guide information 810 at the top of the display screen in a form of the feed message stating, "The communication connection loss occurs between the air purifier and the server. Please move to the living room where the air purifier is located to identify the cause of the communication connection loss" as shown in FIG. 8.

The electronic device 100 may identify that the electronic device 100 is located in the same space as the other electronic device 10 (S725). For example, the electronic device 100 may identify that the electronic device 100 is located in the same space as the other electronic device 10 based on the location information detected through the sensor or the information received from the AP connected to the other electronic device 10.

The electronic device 100 may perform the signal scanning operation (S730). For example, the electronic device 100 may control the communication interface 110 to receive the signal broadcast by the other electronic device 10 based on the electronic device 100 identified as being located in the same space as the other electronic device 10.

According to another embodiment, the other electronic device 10 may generate the signal including the error code after the connection loss occurs (S735) and broadcast the generated signal (S740).

The electronic device 100 may receive the broadcast signal through the scanning operation (S745).

Subsequent operations S750 to S770 are the same as the operations S325 to S345 described with reference to FIG. 3, and their redundant descriptions are thus omitted.

According to an embodiment, the description describes with reference to FIG. 7 that the electronic device 100 and the user terminal 30 are implemented as the separate devices, which is only an embodiment, and the user terminal 30 and the electronic device 100 may be implemented as the single device. Here, the electronic device 100 may transmit the error information received from the other electronic device 10 to the server 20, and generate the guide information based on the error information. However, this configuration is only an embodiment, and the electronic device 100 may provide the guide information to the user directly without transmitting the signal including the error information received from the other electronic device 10 to the server 20 based on the electronic device 100 being capable of directly notifying the user, such as a mobile device, a wearable device, or a television (TV).

In an example case in which the electronic device 100 and the other electronic device 10 are connected to the same router, only the other electronic device 10, which is one of a plurality of devices, may lose the communication connection. Here, the electronic device 100 may receive a signal including information on signal strength (e.g., received signal strength indicator (RSSI)) from the other electronic device 10. In addition, the electronic device 100 may transmit the information on the signal strength that is received from the other electronic device 10 to the server 20. Accordingly, the server 20 may transmit, to the user terminal 30, the guide information for guiding the other electronic device 10 that is unable to be connected thereto because the corresponding device is far away from the router. The user terminal 30 may provide the guide information transmitted from the server 20.

In one or more embodiments, the other electronic device 10 and the server 20 may share an encryption key for encrypting the error information and a decryption key. Therefore, the other electronic device 10 may encrypt the error information by using the encryption key and then broadcast the same. Here, the electronic device 100 may transmit the encrypted error information to the server 20, and the server 20 may decrypt the encrypted error information by using the decryption key. Accordingly, the security of the error information broadcast by the other electronic device 10 may be strengthened.

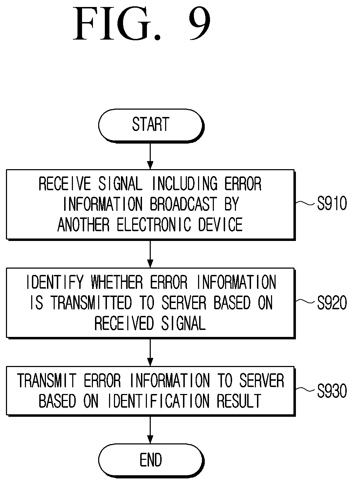

FIG. 9 is a flowchart for describing a controlling method of an electronic device according to an embodiment of the present disclosure.

The electronic device 100 may receive the signal including the error information broadcast by the other electronic device 10 (S910). Here, the error information may include the information on the communication connection loss occurring between the other electronic device 10 and the server 20. In addition, the error information may include the identification information of the other electronic device 10 in addition to the information on the communication connection loss occurring with the server 20.

The electronic device 100 may identify whether to transmit the error information to the server 20 based on the received signal (S920). In an embodiment, the electronic device 100 may identify whether to transmit the error information to the server 20 by identifying whether the identification information of the other electronic device 10 included in the received signal matches its pre-registered identification information.

The electronic device 100 may transmit the error information to the server 20 based on the identification result (S930).

In one or more embodiments, the electronic device 100 may periodically scan the signal broadcast by the other electronic device 10.

In one or more embodiments, the electronic device 100 may receive the request signal to scan the signal broadcast by the other electronic device 10 from the server 20 through the communication interface 110 based on the server 20 detecting the communication connection loss occurring with the other electronic device 10. The electronic device 100 may control the communication interface 110 to scan the signal broadcast by the other electronic device 10 in based on the request signal. For example, the electronic device 100 may control the communication interface 110 to scan the signal broadcast by the other electronic device 10 in response to the request signal.

In one or more embodiments, the electronic device 100 may receive the request signal to scan the signal broadcast by the other electronic device 10 from the server 20 based on the electronic device 100 identified by the server 20 as being located in the same space as the other electronic device 10.

In one or more embodiments, the electronic device 100 may receive the request signal to scan the signal broadcast by the other electronic device 10 from the server 20 based on the server 20 detecting the communication connection loss occurring with the other electronic device 10. The electronic device 100 may provide the guide information on the communication connection loss occurring between another electronic device 10 and the server 20 based on the request signal.

In one or more embodiments, the electronic device 100 may control the communication interface 110 to scan the signal broadcast by the other electronic device 10 based on the electronic device 100 identified as being located in the same space as the other electronic device 100.

In one or more embodiments, the electronic device 100 may receive the guide information corresponding to the error information based on the server 20 receiving the error information. Here, the guide information may include at least one of the information on the cause of the communication connection loss occurring between the other electronic device 10 and the server 20 or the information for resolving the communication connection loss.

According to an embodiment, the method according to the various embodiments of the present disclosure may be provided by being included in a computer program product. The computer program product may be traded between a seller and a buyer as a commodity. The computer program product may be distributed in the form of a machine-readable storage medium (for example, a compact disc read only memory (CD-ROM)), or may be distributed online (for example, downloaded or uploaded) through an application store (for example, PlayStore^{™}) or directly between two user devices (for example, smartphones). In case of the online distribution, at least a portion of the computer program product (e.g., downloadable app) may be at least temporarily stored or temporarily provided in the machine-readable storage medium such as the memory of a manufacturer server, a server of an application store, or a relay server.

The method according to the various embodiments of the present disclosure may be implemented by software including an instruction stored on the machine-readable storage medium (e.g., computer-readable storage medium). A machine may be a device that invokes the stored instruction from the storage medium and may be operated based on the invoked instruction, and may include the electronic device (e.g., TV) according to the disclosed embodiments.

According to an embodiment, the machine-readable storage medium may be provided in the form of a non-transitory storage medium. Here, the "non-transitory storage medium" may refer to a tangible device and only indicate that this storage medium does not include a signal (e.g., electromagnetic wave), and this term does not distinguish a case where data is stored semi-permanently in the storage medium and a case where data is temporarily stored in the storage medium from each other. For example, the "non-transitory storage medium" may include a buffer in which data is temporarily stored.

According to an embodiment, based on the instruction being executed by the processor, the processor may directly perform a function corresponding to the instruction or other components may perform the function corresponding to the instruction under the control of the processor. The instruction may include codes generated or executed by a compiler or an interpreter.

Although the embodiments of the present disclosure are shown and described as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. An electronic device comprising:
a communication interface;
a memory storing at least one instruction; and
at least one processor connected to the memory and the communication interface and configured to control the electronic device,
wherein, based on the at least one processor executing the at least one instruction, the at least one processor is configured to control the electronic device to: receive a signal comprising error information broadcast by another electronic device through the communication interface, the error information comprising information related to a communication connection loss occurring between the other electronic device and a server,
identify whether to transmit the error information to the server based on the received signal, and
control the communication interface to transmit the error information to the server based on identifying that the error information is to be transmitted to the server.

2. The electronic device as claimed in claim 1, wherein the communication interface is configured to periodically scan for the signal broadcast by the other electronic device.

3. The electronic device as claimed in claim 1, wherein the at least one processor is configured to control the electronic device to: receive, from the server, a request signal to scan for the signal broadcast by the other electronic device, the request signal based on the server detecting the communication connection loss occurring with the other electronic device, and
control the communication interface to scan for the signal broadcast by the other electronic device based on the request signal.

4. The electronic device as claimed in claim 3, wherein the at least one processor is configured to control the electronic device to:
receive the request signal to scan the signal broadcast by the other electronic device from the server through the communication interface based on the electronic device identified by the server as being located in a same area as the other electronic device.

5. The electronic device as claimed in claim 1, further comprising:
a display,
wherein the at least one processor is configured to control the electronic device to:
receive, from the server, a request signal to scan for the signal broadcast by the other electronic device, the request signal based on the server detecting the communication connection loss occurring with the other electronic device, and
control the display to provide guide information on the communication connection loss occurring between the other electronic device and the server based on the request signal.

6. The electronic device as claimed in claim 5, wherein the at least one processor is configured to control the communication interface to scan for the signal broadcast by the other electronic device based on the electronic device identified as being located in a same area as the other electronic device.

7. The electronic device as claimed in claim 1, wherein the error information comprises information on a cause of the communication connection loss occurring between the other electronic device and the server and identification information of the other electronic device.

8. The electronic device as claimed in claim 7, wherein the at least one processor is configured to control the electronic device to:
identify whether to transmit the error information to the server by identifying whether the identification information of the other electronic device included in the received signal matches pre-registered identification information.

9. The electronic device as claimed in claim 1, wherein the at least one processor is configured to control the electronic device to:
receive guide information corresponding to the error information through the communication interface based on the server receiving the error information,
wherein the guide information comprises at least one of information on a cause of the communication connection loss occurring between the other electronic device and the server or information for resolving the communication connection loss.

10. A method of operating an electronic device, the method comprising:
receiving a signal comprising error information broadcast by another electronic device, the error information comprising information related to a communication connection loss occurring between the other electronic device and a server;
identifying whether the error information is to be transmitted to the server based on the received signal; and
transmitting the error information to the server based on identifying that the error information is to be transmitted to the server.

11. The method as claimed in claim 10, further comprising:
periodically scanning for the signal broadcast by the other electronic device.

12. The method as claimed in claim 10, further comprising:
receiving, from the server, a request signal to scan for the signal broadcast by the other electronic device, the request signal based on the server detecting the communication connection loss occurring with the other electronic device; and
scanning for the signal broadcast by the other electronic device based on the request signal.

13. The method as claimed in claim 12, wherein in the receiving of the request signal,
the request signal to scan the signal broadcast by the other electronic device is received from the server based on the electronic device identified by the server as being located in a same area as the other electronic device.

14. The method as claimed in claim 10, further comprising:
receiving, from the server, a request signal to scan for the signal broadcast by the other electronic device, the request signal based on the server detecting the communication connection loss occurring with the other electronic device; and
providing guide information on the communication connection loss occurring between the other electronic device and the server based on the request signal.

15. The method as claimed in claim 14, further comprising:
scanning for the signal broadcast by the other electronic device based on the electronic device identified as being located in a same area as the other electronic device.
